# EUROPEAN PATENT APPLICATION

(11) **EP 4 296 640 A2**
(43) Date of publication of application: **27.12.2023**
(21) Application number: 23208567.0
(22) Date of filing: 20.08.2019
(51) Int. Cl.: G01K 1/20

(54) **SENSOR DEVICE**

(30) Priority: 28.09.2018 JP 2018183805
(62) Divisional of application: 19867114.1
(71) Applicant: DIC Corporation, Tokyo 174-8520 (JP)
(72) Inventor: The designation of the inventor has not yet been filed
(74) Representative: Beckmann, Claus

(57) **Abstract**

A sensor device to be installed on an installation surface includes: a substrate including a substrate body that is disposed along the installation surface and an extension portion that extends from the substrate body in a direction away from the installation surface; and a temperature sensor that is mounted on the extension portion and that detects an ambient temperature around the sensor device.

## Description

### Technical Field

The technology disclosed in the present application relates to a sensor device.

### Background Art

Sensor devices including a substrate and a temperature sensor mounted on the substrate are known (see, for example, PTLs 1 and 2).

### Citation List

### Patent Literature

PTL 1: Japanese Unexamined Patent Application Publication No. 2005-340925
PTL 2: Japanese Unexamined Patent Application Publication No. 3-156331
PTL 3: Japanese Unexamined Utility Model Registration Application Publication No. 5-52727

### Summary of Invention

### Technical Problem

When a sensor device is installed on an installation surface to detect the ambient temperature around the sensor device by using a temperature sensor, if the temperature sensor receives thermal effect of the installation surface, the ability of the temperature sensor to follow a change in the ambient temperature may be impaired. The ambient temperature is the temperature of air around the sensor device. For example, the ambient temperature corresponds to the room temperature when the sensor device is installed indoors, and corresponds to the outside temperature when the sensor device is installed outdoors.

An object of one aspect of the technology disclosed in the present application is to provide a sensor device in which the ability of a temperature sensor to follow a change in the ambient temperature is high.

### Solution to Problem

A sensor device according to an aspect of the technology disclosed in the present application, which is a sensor device to be installed on an installation surface, includes a substrate and a temperature sensor. The substrate includes a substrate body that is disposed along the installation surface and an extension portion that extends from the substrate body in a direction away from the installation surface. The temperature sensor is mounted on the extension portion and detects an ambient temperature around the sensor device. Advantageous Effects of Invention

With the technology disclosed in the present application, it is possible to provide a sensor device in which the ability of a temperature sensor to follow a change in the ambient temperature is high.

### Brief Description of Drawings

[Fig. 1] Fig. 1 is a side sectional view illustrating a state in which a sensor device according to a first embodiment is installed on an installation surface.
[Fig. 2] Fig. 2 is a plan view of a substrate unit of Fig. 1.
[Fig. 3] Fig. 3 is a plan view illustrating the process of bending an extension portion in the substrate unit of Fig. 1.
[Fig. 4] Fig. 4 is a graph representing the ability of a temperature sensor of Fig. 1 to follow a change in the ambient temperature.
[Fig. 5] Fig. 5 is a side sectional view illustrating a state in which a sensor device according to a second embodiment is installed on an installation surface.
[Fig. 6] Fig. 6 is a plan view of a substrate unit of Fig. 5.
[Fig. 7] Fig. 7 is a plan view illustrating the process of bending an extension portion in the substrate unit of Fig. 5.
[Fig. 8] Fig. 8 shows three-side views illustrating the process of bending an extension portion in a substrate unit according to a third embodiment.
[Fig. 9] Fig. 9 shows three-side views illustrating the process of bending an extension portion in a substrate unit according to a fourth embodiment.
[Fig. 10] Fig. 10 shows three-side views illustrating the process of bending an extension portion in a substrate unit according to a fifth embodiment.
[Fig. 11] Fig. 11 is a partial enlarged perspective view of a sensor device according to a sixth embodiment.
[Fig. 12] Fig. 12 is a side sectional view illustrating a state in which a sensor device according to a comparative example is installed on an installation surface.
[Fig. 13] Fig. 13 is a graph representing the ability of a temperature sensor of Fig. 12 to follow a change in the ambient temperature.

### Description of Embodiments

### [First Embodiment]

First, a first embodiment of the technology disclosed in the present application will be described.

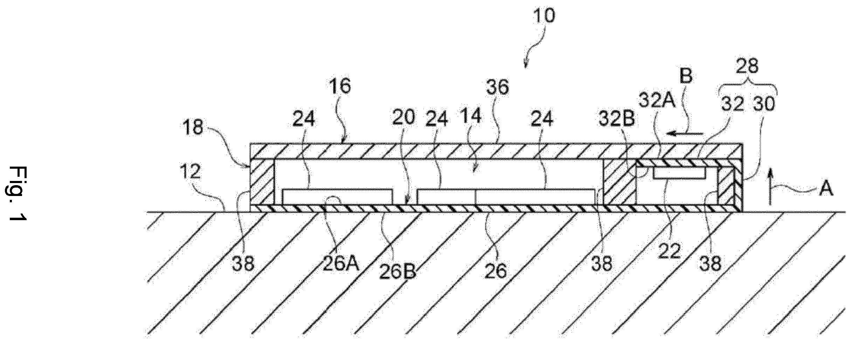

A sensor device 10 illustrated in Fig. 1 detects the ambient temperature around the sensor device 10 in a state in which the sensor device 10 is installed on an installation surface 12. The sensor device 10 is driven by an internal battery or an external power supply, and periodically transmits detection data wirelessly or by wire. The sensor device 10 may be installed either outdoors or indoors. The ambient temperature is the temperature of air around the sensor device 10. For example, the ambient temperature corresponds to the room temperature when the sensor device 10 is installed indoors, and corresponds to the outside temperature when the sensor device is installed outdoors. The sensor device 10 includes a substrate unit 14, a cover 16, and a spacer 18.

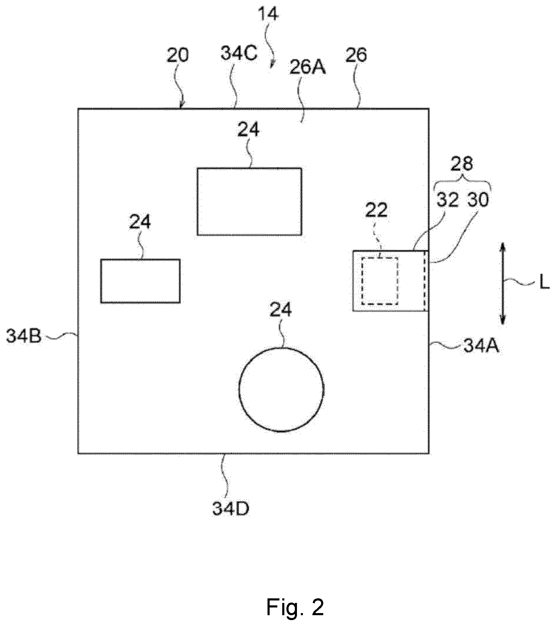

The substrate unit 14 includes a substrate 20, a temperature sensor 22, and a plurality of heat generating modules 24 (see Fig. 2 as appropriate). The substrate 20 is, for example, a flexible substrate. The substrate 20 includes a substrate body 26 and an extension portion 28. The substrate body 26 has a quadrangular flat shape in plan view, and is disposed along the installation surface 12.

A surface on one side in the thickness direction of the substrate body 26 is a mounting surface 26A, and a surface on the other side in the thickness direction of the substrate body 26 is an affixing surface 26B. The thickness direction of the substrate body 26 is the same as the direction normal to the mounting surface 26A and the affixing surface 26B of the substrate body 26. The plurality of heat generating modules 24 and other components (not shown) are mounted on the mounting surface 26A. A conductive pattern (not shown) is formed on the substrate 20. The plurality of heat generating modules 24, the temperature sensor 22 (described below), and the like are electrically connected via the conductive pattern. The affixing surface 26B is directly affixed to the installation surface 12 by using, for example, a double-sided tape.

The extension portion 28 extends from the substrate body 26 in a direction away from the installation surface 12. That is, the extension portion 28 extends from the substrate body 26 toward one side in the thickness direction of the substrate body 26 (in the direction of arrow A). The extension portion 28 includes a standing portion 30 that stands with respect to the substrate body 26, and a bent portion 32 that is bent from an upper end of the standing portion 30 toward the substrate body 26 side (in the direction of arrow B). The bent portion 32 forms a distal end portion of the extension portion 28 and faces the substrate body 26 in the thickness direction of the substrate body 26. The bent portion 32 has an upper surface 32A facing toward a side opposite from the substrate body 26 in a side view of the substrate 20, and a lower surface 32B facing toward the substrate body 26 side.

The temperature sensor 22 is, for example, a chip sensor, and is mounted on the lower surface 32B of the bent portion 32. The temperature sensor 22 detects the ambient temperature around the sensor device 10, and outputs a signal in accordance with the ambient temperature. The temperature sensor 22 is not in direct contact with any members other than the extension portion 28, and is in a state of floating in a space inside the cover 16 described below (a space between the cover 16 and the installation surface 12). To the temperature sensor 22, air outside the sensor device 10 is supplied through an opening (not shown) formed in the cover 16, an opening (not shown) formed between a top wall 36 of the cover 16 and the installation surface 12, and the like.

As illustrated in Fig. 2, the extension portion 28 extends from a part of a peripheral portion of the substrate body 26. To be specific, the substrate body 26 includes a plurality of side portions 34A to 34D that form the peripheral portion of the substrate body 26. The extension portion 28 extends from a part, in the longitudinal direction (the direction of the arrow L), of one side portion 34A among the plurality of side portions 34A to 34D. The extension portion 28 is located at a central part of the side portion 34A in the longitudinal direction.

The bent portion 32, which is the distal end portion of the extension portion 28, is located at a position that does not overlap the plurality of heat generating modules 24 in plan view of the substrate 20. Thus, the temperature sensor 22 is disposed at a position deviated from the plurality of heat generating modules 24 in plan view of the substrate 20. That is, the temperature sensor 22 is disposed at a position that does not overlap the plurality of heat generating modules 24 in plan view of the substrate 20.

As illustrated in Fig. 1, the cover 16 covers the substrate unit 14. The cover 16 includes the top wall 36 having substantially the same shape and size as the substrate body 26. The top wall 36 faces the substrate body 26 in the thickness direction of the substrate body 26. The extension portion 28 has elasticity, the standing portion 30 is in an elastically bent state (a compressed state) between the top wall 36 and the substrate body 26, and thereby the bent portion 32 is in contact with the top wall 36 in a pressed state. The spacer 18 includes a plurality of support portions 38 disposed between the top wall 36 and the substrate body 26.

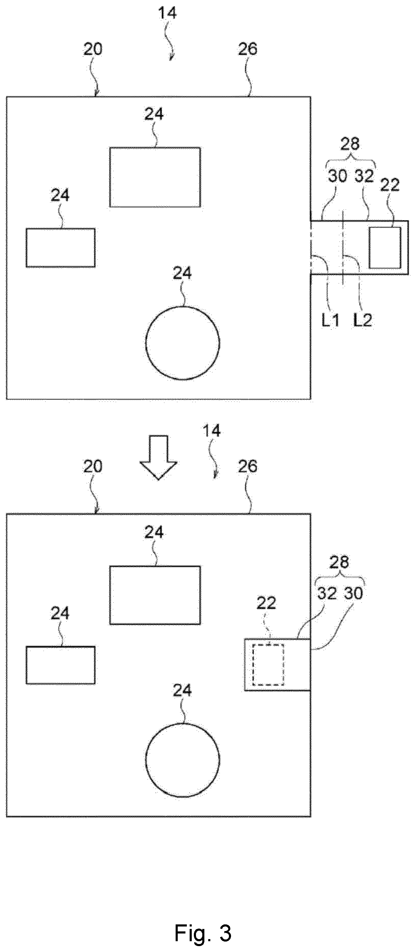

The substrate unit 14 is formed as follows. That is, as illustrated in Fig. 3, the substrate 20, having a flat shape and including the substrate body 26 and the extension portion 28, is formed; and the temperature sensor 22 and the plurality of heat generating modules 24 are mounted on the substrate 20. Then, the extension portion 28 is bent along a first bending line L1 between the substrate body 26 and the standing portion 30 and along a second bending line L2 between the standing portion 30 and the bent portion 32. Thus, the substrate unit 14 is formed.

Next, functions and advantageous effects of the first embodiment will be described.

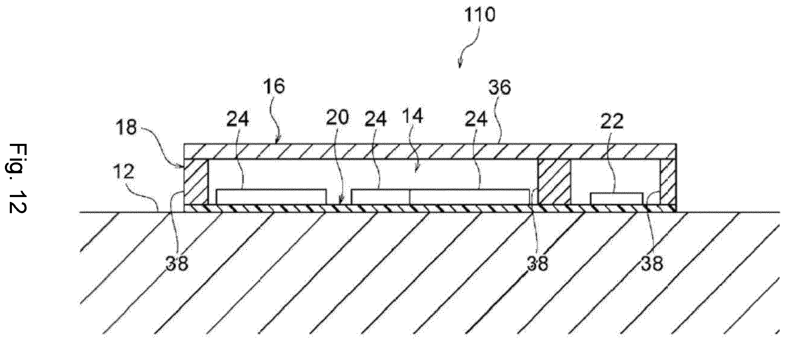

First, a comparative example will be described in order to clarify the functions and advantageous effects of the first embodiment. Fig. 12 illustrates a sensor device 110 according to the comparative example. The sensor device 110 according to the comparative example differs from the sensor device 10 according to the first embodiment in that the extension portion 28 (see Figs. 1 to 3) is omitted from the substrate 20. The temperature sensor 22 is mounted on the substrate 20 having a flat shape and disposed along the installation surface 12.

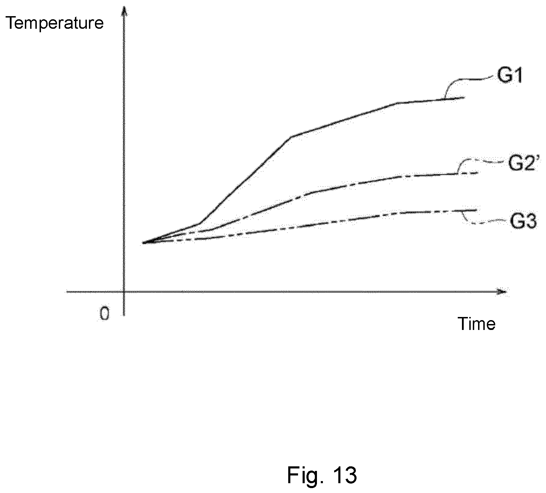

Fig. 13 is a graph representing the ability of the temperature sensor 22 to follow a change in the ambient temperature, regarding the sensor device 110 according to the comparative example. In Fig. 13, a graph G1 represents the ambient temperature, a graph G2' represents the temperature detected by the temperature sensor 22, and a graph G3 represents the temperature of the installation surface 12.

As illustrated in Fig. 13, in the sensor device 110 according to the comparative example, the temperature sensor 22 receives thermal effect of the installation surface 12, and therefore the ability of the temperature sensor 22 to follow a change in the ambient temperature is impaired. That is, in the sensor device 110 according to the comparative example, the temperature detected by the temperature sensor 22 increases in accordance with increase of the temperature of the installation surface 12, and the difference between the ambient temperature and the temperature detected by the temperature sensor 22 increases even when the ambient temperature increases.

In contrast, in the sensor device 10 according to the first embodiment illustrated in Fig. 1, the extension portion 28 extends from the substrate body 26 in a direction away from the installation surface 12, and the temperature sensor 22 is mounted on the extension portion 28. Accordingly, it is possible to reduce thermal effect that the temperature sensor 22 receives from the installation surface 12 by the amount due to separation of the temperature sensor 22 from the installation surface 12. Thus, it is possible to improve the ability of the temperature sensor 22 to follow a change in the ambient temperature.

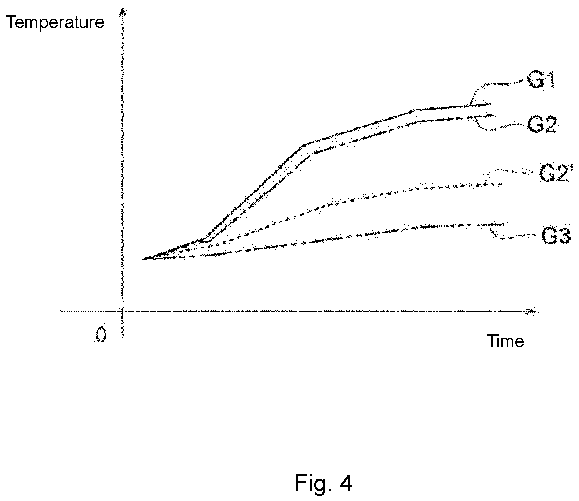

Fig. 4 is a graph representing the ability of the temperature sensor 22 to follow a change in the ambient temperature, regarding the sensor device 10 according to the first embodiment. In Fig. 4, a graph G1 represents the ambient temperature, a graph G2 represents the temperature detected by the temperature sensor 22, and a graph G3 represents the temperature of the installation surface 12. For reference, a graph G2' represents the temperature detected by the temperature sensor 22 in the sensor device 110 according to the comparative example.

As illustrated in Fig. 4, in the sensor device 10 according to the first embodiment, it is possible to reduce thermal effect that the temperature sensor 22 receives from the installation surface 12, and therefore the ability of the temperature sensor 22 to follow a change in the ambient temperature is high. That is, in the sensor device 10 according to the first embodiment, the difference between the temperature of the installation surface 12 and the temperature detected by the temperature sensor 22 increases as the ambient temperature increases, and the temperature detected by the temperature sensor 22 increases in accordance with increase of the ambient temperature.

In the sensor device 10 according to the first embodiment, the temperature detected by the temperature sensor 22 is closer to the ambient temperature than in the sensor device 110 according to the comparative example. Thus, with the sensor device 10 according to the first embodiment, it is possible to improve the ability of the temperature sensor 22 to follow a change in the ambient temperature.

With the sensor device 10 according to the first embodiment, the following functions and advantageous effects are further achieved. That is, with the sensor device 10 according to the first embodiment, the temperature sensor 22 is mounted on the bent portion 32, which is the distal end portion of the extension portion 28. Accordingly, the distance between the temperature sensor 22 and the installation surface 12 can be increased by the amount due to mounting of the temperature sensor 22 on the distal end portion of the extension portion 28, and thus it is possible to further reduce thermal effect that the temperature sensor 22 receives from the installation surface 12.

The temperature sensor 22 is mounted on the lower surface 32B of the bent portion 32. Accordingly, it is possible to effectively use the space between the bent portion 32 and the substrate body 26 for disposing the temperature sensor 22 while reliably providing a large distance between the temperature sensor 22 and the installation surface 12. Thus, it is possible to achieve both the ability of the temperature sensor 22 to follow a change in the ambient temperature and reduction in size of the sensor device 10 in the height direction.

The bent portion 32 is bent from the upper end of the standing portion 30 toward the substrate body 26 side (in the direction of arrow B), and faces the substrate body 26. Accordingly, it is possible to suppress protrusion of the bent portion 32 in a lateral direction of the substrate body 26 (in the direction opposite to the arrow B). Thus, it is possible to reduce the size of the sensor device 10 in the direction along the installation surface 12.

The temperature sensor 22 is disposed at a position deviated from the heat generating module 24 in plan view of the substrate 20. Accordingly, it is possible to reduce thermal effect that the temperature sensor 22 receives from, in addition to the installation surface 12, the plurality of heat generating modules 24. Thus, it possible to further improve the ability of the temperature sensor 22 to follow a change in the ambient temperature.

The extension portion 28 has elasticity, the standing portion 30 is in an elastically bent state (compressed state) between the top wall 36 and the substrate body 26, and thereby the bent portion 32 is in contact with the top wall 36 of the cover 16 in a pressed state. Accordingly, the temperature sensor 22 can be held in a state of being separated from the installation surface 12, and thus it is possible to maintain the ability of the temperature sensor 22 to follow a change in the ambient temperature.

Next, modifications of the first embodiment will be described.

In the first embodiment, the substrate body 26 is directly affixed to the installation surface 12. However, a bottom wall that is to be affixed to the installation surface 12 may be formed in the cover 16, and the substrate body 26 may be disposed along the installation surface 12 with the bottom wall therebetween. The substrate body 26 may be fixed to the installation surface 12 by using a method other than affixing.

In the first embodiment, the temperature sensor 22 outputs a signal in accordance with the ambient temperature. However, the temperature sensor 22 may output a signal in accordance with the ambient temperature and the ambient humidity. The sensor device 10 may periodically transmit the detected temperature data and the detected humidity data wirelessly or by wire.

In the first embodiment, the substrate 20 is a flexible substrate. However, the substrate 20 may be a substrate other than a flexible substrate.

In the first embodiment, the temperature sensor 22 is disposed at a position deviated from the plurality of heat generating modules 24 in plan view of the substrate 20. However, the temperature sensor 22 may be disposed at a position overlapping the plurality of heat generating modules 24 in plan view of the substrate 20.

In the first embodiment, the sensor device 10 is installed on the installation surface 12 extending in the horizontal direction. However, the sensor device 10 may be installed on an installation surface 12 extending in a direction inclined with respect to the horizontal direction, or may be installed on an installation surface 12 extending in the vertical direction.

### [Second Embodiment]

Next, a second embodiment of the technology disclosed in the present application will be described.

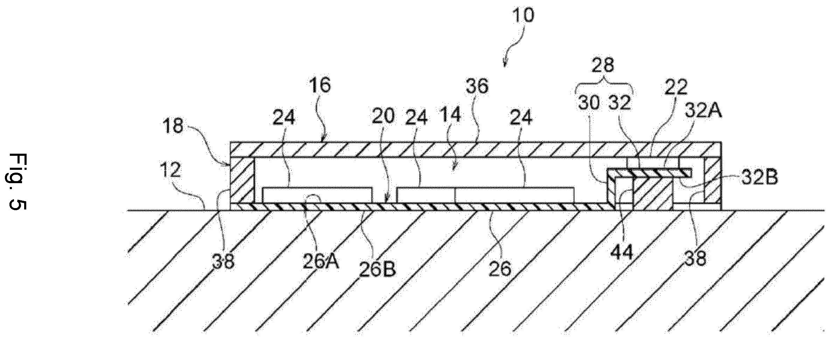

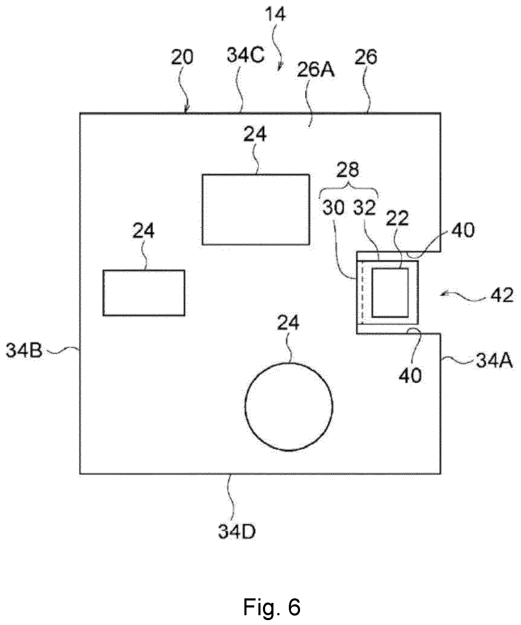

In the second embodiment illustrated in Figs. 5 to 7, the configuration of the sensor device 10 is changed from that of the first embodiment as follows. That is, as illustrated in Fig. 6, a pair of slits 40 are formed in the substrate 20. The pair of slits 40 extend from a central part, in the longitudinal direction, of the side portion 34A toward the side portion 34B opposite to the side portion 34A. The extension portion 28 is formed by a cut-and-raised piece between the pair of slits 40.

The extension portion 28 includes the standing portion 30 that stands with respect to the substrate body 26 and the bent portion 32 that is bent with respect to the standing portion 30. The bent portion 32 overlaps a cut-out portion 42, which is formed in the substrate 20 by the cut-and-raised piece, in plan view of the substrate 20. As illustrated in Fig. 5, the bent portion 32 has the upper surface 32A facing toward a side opposite from the substrate body 26 in a side view of the substrate 20 and the lower surface 32B facing toward the substrate body 26 side. The temperature sensor 22 is mounted on the upper surface 32A of the bent portion 32, and a heat insulator 44 having a block shape is attached to the lower surface 32B of the bent portion 32.

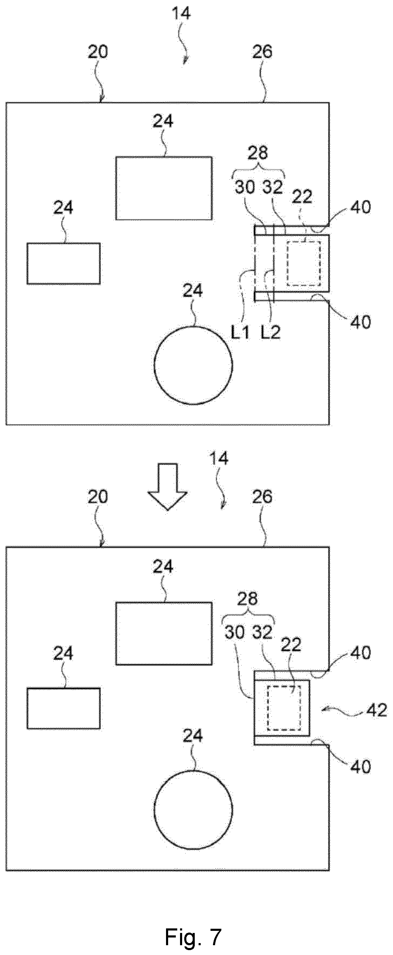

In the second embodiment, the substrate unit 14 is formed as follows. That is, as illustrated in Fig. 7, the substrate 20, having a flat shape and having the pair of slits 40, is formed; and the temperature sensor 22 and the plurality of heat generating modules 24 are mounted on the substrate 20. Then, the extension portion 28 is bent along a first bending line L1 between the substrate body 26 and the standing portion 30 and along a second bending line L2 between the standing portion 30 and the bent portion 32. Thus, the substrate unit 14 is formed.

Also with the second embodiment, as illustrated in Fig. 5, the extension portion 28 extends from the substrate body 26 in a direction away from the installation surface 12, and the temperature sensor 22 is mounted on the extension portion 28. Accordingly, it is possible to reduce thermal effect that the temperature sensor 22 receives from the installation surface 12 by the amount due to separation of the temperature sensor 22 from the installation surface 12. Thus, it is possible to improve the ability of the temperature sensor 22 to follow a change in the ambient temperature.

The temperature sensor 22 is mounted on the bent portion 32, which is the distal end portion of the extension portion 28. Accordingly, the distance between the temperature sensor 22 and the installation surface 12 can be increased by the amount due to mounting of the temperature sensor 22 on the distal end portion of the extension portion 28, and thus it is possible to further reduce thermal effect that the temperature sensor 22 receives from the installation surface 12.

The extension portion 28 is a cut-and-raised piece between the pair of slits 40 (see Fig. 6) formed in the substrate 20. Accordingly, in the process of manufacturing the substrate 20, even when manufacturing a plurality of substrates 20 (obtaining multiple pieces) from one sheet material, it is possible to efficiently manufacture the substrate 20 by suppressing generation of a waste portion in the sheet material.

The bent portion 32 has the upper surface 32A facing toward a side opposite from the substrate body 26 and the lower surface 32B facing toward the substrate body 26 side, the temperature sensor 22 is mounted on the upper surface 32A, and the heat insulator 44 is attached to the lower surface 32B. Accordingly, the heat insulator 44 is disposed between the temperature sensor 22 and the installation surface 12, and thus it is possible to more effectively reduce thermal effect that the temperature sensor 22 receives from the installation surface 12.

In the second embodiment, modifications that are the same as those of the first embodiment may be applied.

### [Third Embodiment]

Next, a third embodiment of the technology disclosed in the present application will be described.

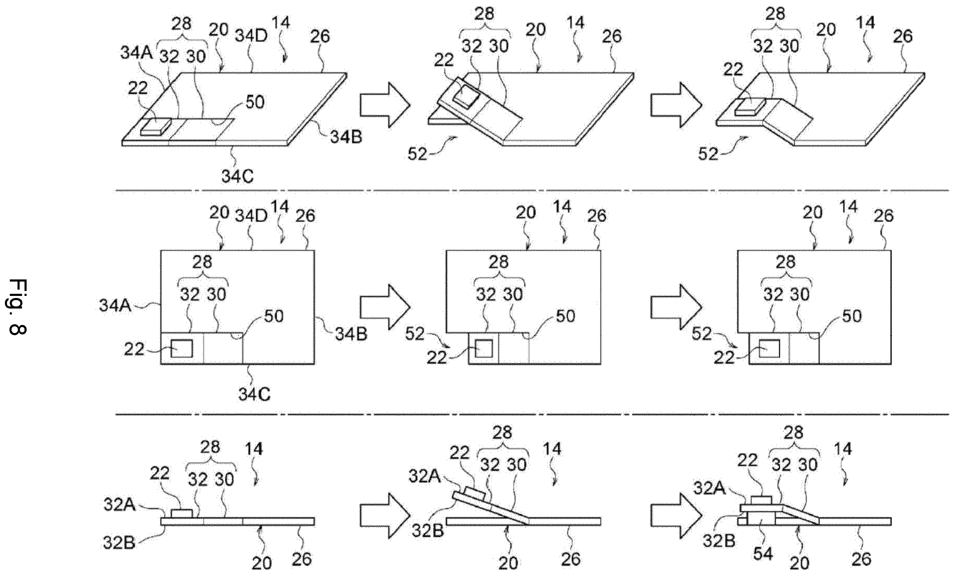

In the third embodiment illustrated in Fig. 8, the configuration of the substrate unit 14 is changed from that of the second embodiment as follows. That is, a slit 50 extending along the side portion 34C, among the plurality of side portions 34A to 34D, is formed in the substrate 20. The extension portion 28 is formed by a cut-and-raised piece formed between the slit 50 and the side portion 34C.

The extension portion 28 includes the standing portion 30 that stands with respect to the substrate body 26 and the bent portion 32 that is bent with respect to the standing portion 30. The bent portion 32 overlaps a cut-out portion 52, which is formed in the substrate 20 by the cut-and-raised piece, in plan view of the substrate 20. The bent portion 32 has the upper surface 32A facing toward a side opposite from the substrate body 26 in a side view of the substrate 20 and the lower surface 32B facing toward the substrate body 26 side. The temperature sensor 22 is mounted on the upper surface 32A of the bent portion 32. A heat insulator 54 having a block shape is attached to the lower surface 32B of the bent portion 32.

In the third embodiment, the substrate unit 14 is formed as follows. That is, the substrate 20, having a flat shape and having the slit 50, is formed; and the temperature sensor 22 and the plurality of heat generating modules 24 are mounted on the substrate 20. Then, the extension portion 28 is bent between the substrate body 26 and the standing portion 30 and between the standing portion 30 and the bent portion 32. Thus, the substrate unit 14 is formed.

Also with the third embodiment, the extension portion 28 extends from the substrate body 26 in a direction away from the installation surface, and the temperature sensor 22 is mounted on the extension portion 28. Accordingly, it is possible to reduce thermal effect that the temperature sensor 22 receives from the installation surface by the amount due to separation of the temperature sensor 22 from the installation surface. Thus, it is possible to improve the ability of the temperature sensor 22 to follow a change in the ambient temperature.

The temperature sensor 22 is mounted on the bent portion 32, which is the distal end portion of the extension portion 28. Accordingly, the distance between the temperature sensor 22 and the installation surface can be increased by the amount due to mounting of the temperature sensor 22 on the distal end portion of the extension portion 28, and thus it is possible to further reduce thermal effect that the temperature sensor 22 receives from the installation surface.

The extension portion 28 is a cut-and-raised piece formed between the slit 50, which is formed in the substrate 20, and the side portion 34C. Accordingly, in the process of manufacturing the substrate 20, even when manufacturing a plurality of substrates 20 (obtaining multiple pieces) from one sheet material, it is possible to efficiently manufacture the substrate 20 by suppressing generation of a waste portion in the sheet material.

The bent portion 32 has the upper surface 32A facing toward a side opposite from the substrate body 26 and the lower surface 32B facing toward the substrate body 26 side, the temperature sensor 22 is mounted on the upper surface 32A, and the heat insulator 54 is attached to the lower surface 32B. Accordingly, the heat insulator 54 is disposed between the temperature sensor 22 and the installation surface, and thus it is possible to more effectively reduce thermal effect that the temperature sensor 22 receives from the installation surface.

In the third embodiment, modifications that are the same as those of the first embodiment may be applied.

### [Fourth Embodiment]

Next, a fourth embodiment of the technology disclosed in the present application will be described.

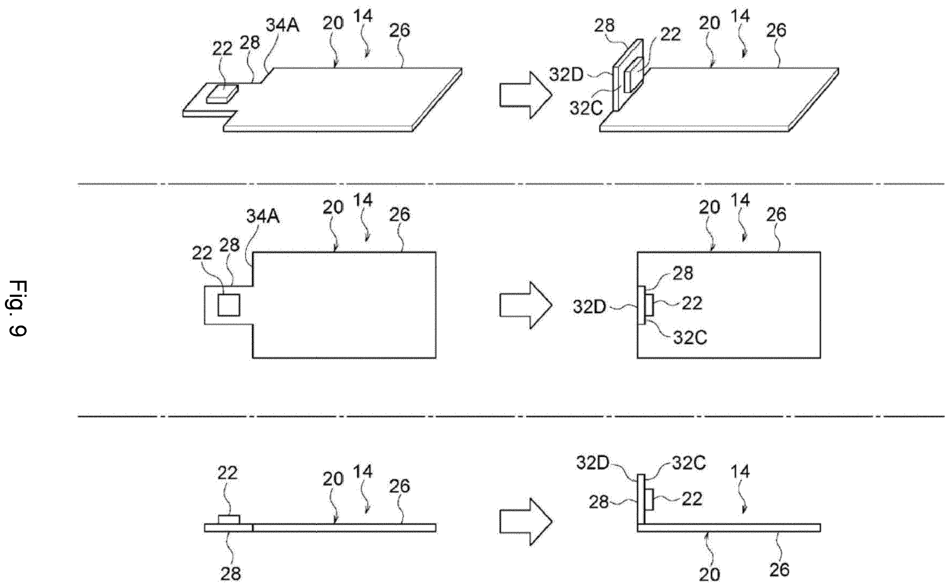

In the fourth embodiment illustrated in Fig. 9, the configuration of the substrate unit 14 is changed from that of the first embodiment as follows. That is, the extension portion 28 has a configuration in which the bent portion 32 (see Fig. 1) is omitted. The extension portion 28 is an example of a "standing portion" and stands with respect to the substrate body 26. The extension portion 28 is formed in a part of a peripheral portion of the substrate body 26 (for example, a central part of the side portion 34A in the longitudinal direction). The extension portion 28 has an inner surface 32C facing toward the substrate body 26 side in a side view of the substrate 20 and an outer surface 32D facing toward a side opposite from the substrate body 26, and the temperature sensor 22 is mounted on the inner surface 32C.

In the fourth embodiment, the substrate unit 14 is formed as follows. That is, the substrate 20, having a flat shape and including the extension portion 28, is formed; and the temperature sensor 22 and the plurality of heat generating modules 24 are mounted on the substrate 20. Then, the extension portion 28 is bent between the substrate body 26 and the standing portion 30. Thus, the substrate unit 14 is formed.

Also with the fourth embodiment, the extension portion 28 extends from the substrate body 26 in a direction away from the installation surface, and the temperature sensor 22 is mounted on the extension portion 28. Accordingly, it is possible to reduce thermal effect that the temperature sensor 22 receives from the installation surface by the amount due to separation of the temperature sensor 22 from the installation surface. Thus, it is possible to improve the ability of the temperature sensor 22 to follow a change in the ambient temperature.

The extension portion 28 has the inner surface 32C facing toward the substrate body 26 side and an outer surface 32D facing toward a side opposite from the substrate body 26 in a side view of the substrate 20, and the temperature sensor 22 is mounted on the inner surface 32C. Accordingly, it is possible to suppress protrusion of the temperature sensor 22 in a lateral direction of the substrate body 26.

In the fourth embodiment, modifications that are the same as those of the first embodiment may be applied.

### [Fifth Embodiment]

Next, a fifth embodiment of the technology disclosed in the present application will be described.

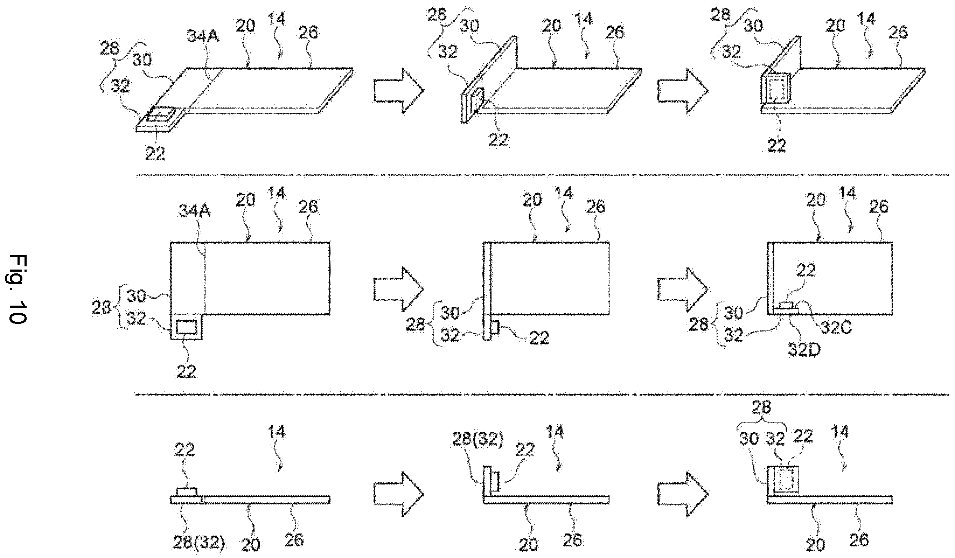

In the fifth embodiment illustrated in Fig. 10, the configuration of the substrate unit 14 is changed from that of the first embodiment as follows. That is, the extension portion 28 is formed over the entire length of the side portion 34A in the longitudinal direction. The extension portion 28 includes the standing portion 30 that stands with respect to the substrate body 26 and the bent portion 32 that is bent from a side part of the standing portion 30 toward the substrate body 26 side. The bent portion 32 has the inner surface 32C facing toward the substrate body 26 side and the outer surface 32D facing toward a side opposite from the substrate body 26, and the temperature sensor 22 is mounted on the inner surface 32C.

In the fifth embodiment, the substrate unit 14 is formed as follows. That is, the substrate 20, having a flat shape and including the extension portion 28, is formed; and the temperature sensor 22 and the plurality of heat generating modules 24 are mounted on the substrate 20. Then, the extension portion 28 is bent between the substrate body 26 and the standing portion 30 and between the standing portion 30 and the bent portion 32. Thus, the substrate unit 14 is formed.

Also with the fifth embodiment, the extension portion 28 extends from the substrate body 26 in a direction away from the installation surface, and the temperature sensor 22 is mounted on the extension portion 28. Accordingly, it is possible to reduce thermal effect that the temperature sensor 22 receives from the installation surface by the amount due to separation of the temperature sensor 22 from the installation surface. Thus, it is possible to improve the ability of the temperature sensor 22 to follow a change in the ambient temperature.

The bent portion 32 has the inner surface 32C facing toward the substrate body 26 side and an outer surface 32D facing toward a side opposite from the substrate body 26, and the temperature sensor 22 is mounted on the inner surface 32C. Accordingly, it is possible to suppress protrusion of the temperature sensor 22 in a lateral direction of the substrate body 26.

In the fifth embodiment, modifications that are the same as those of the first embodiment may be applied.

### [Sixth Embodiment]

Next, a sixth embodiment of the technology disclosed in the present application will be described.

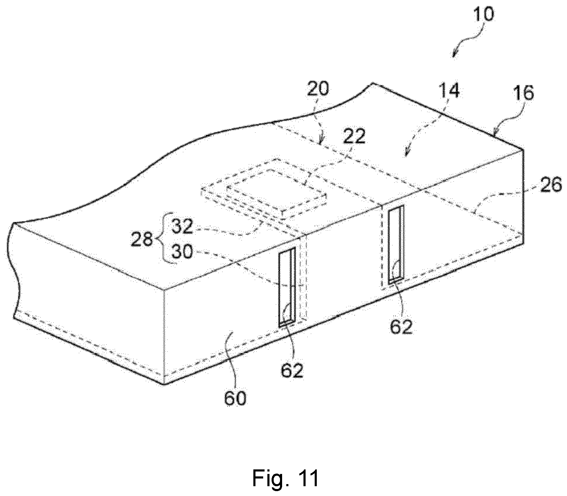

In the sixth embodiment illustrated in Fig. 11, the configuration of the sensor device 10 is changed from that of the first embodiment as follows. That is, the cover 16 includes a side wall 60 extending along a peripheral portion of the substrate 20, and a pair of openings 62 are formed in the side wall 60 in the vicinity of the temperature sensor 22. The pair of openings 62 are disposed on both sides of the extension portion 28 on which the temperature sensor 22 is mounted. For example, a dustproof and drip-proof film having air permeability is provided in the pair of openings 62.

When the openings 62 are formed in the side wall 60 in the vicinity of the temperature sensor 22 as described above, air outside the sensor device 10 can be supplied to the temperature sensor 22 through the openings 62, and thus it is possible to improve the ability of the temperature sensor 22 to follow a change in the ambient temperature.

The cover 16 according to the sixth embodiment, having the openings 62, may be used in combination with the configuration of the substrate unit 14 according to any of the first to fifth embodiments.

Heretofore, the first to sixth embodiments of the technology disclosed in the present application have been described. However, the technology disclosed in the present application is not limited to the above. In addition to the above, it is needless to say that the technology can be carried out in various modifications within the spirit and scope thereof. Thus, the invention provides, in particular, the following embodiments:
1. A sensor device to be installed on an installation surface, comprising:
   a substrate including a substrate body that is disposed along the installation surface and an extension portion that extends from the substrate body in a direction away from the installation surface; and
   a temperature sensor that is mounted on the extension portion and that detects an ambient temperature around the sensor device.
2. The sensor device according to Clause 1,
   wherein the substrate body has an affixing surface that is affixed to the installation surface.
3. The sensor device according to Clause 1 or 2,
   wherein the substrate is a flexible substrate.
4. The sensor device according to any one of Clauses 1 to 3,
   wherein the temperature sensor is not in direct contact with any members other than the extension portion.
5. The sensor device according to any one of Clauses 1 to 4,
   wherein a heat generating module is mounted on the substrate body, and
   wherein the temperature sensor is disposed at a position deviated from the heat generating module in plan view of the substrate.
6. The sensor device according to any one of Clauses 1 to 5,
   wherein the extension portion extends from a part of a peripheral portion of the substrate body.
7. The sensor device according to Clause 6,
   wherein the extension portion includes a standing portion that stands with respect to the substrate body and a bent portion that is bent from an upper end of the standing portion toward the substrate body side, and
   wherein the temperature sensor is mounted on the bent portion.
8. The sensor device according to Clause 7,
   wherein the bent portion has a lower surface facing toward the substrate body side, and
   wherein the temperature sensor is mounted on the lower surface.
9. The sensor device according to Clause 8, comprising:
   a cover that covers the substrate and the temperature sensor,
   wherein the extension portion has elasticity, and
   wherein the bent portion is in contact with a top wall of the cover in a pressed state.
10. The sensor device according to any one of Clauses 1 to 5,
   wherein the extension portion is a cut-and-raised piece that is formed in the substrate.
11. The sensor device according to Clause 10,
   wherein the extension portion includes a standing portion that stands with respect to the substrate body and a bent portion that is bent from an upper end of the standing portion, and
   wherein the temperature sensor is mounted on the bent portion.
12. The sensor device according to Clause 11,
   wherein the bent portion has an upper surface facing toward a side opposite from the substrate body, and
   wherein the temperature sensor is mounted on the upper surface.
13. The sensor device according to Clause 12,
   wherein the bent portion has a lower surface facing toward the substrate body side, and
   wherein a heat insulator is attached to the lower surface.
14. The sensor device according to any one of Clauses 1 to 5,
   wherein the extension portion is a standing portion that stands with respect to the substrate body.
15. The sensor device according to Clause 14,
   wherein the standing portion has an inner surface facing toward the substrate body side, and
   wherein the temperature sensor is mounted on the inner surface.
16. The sensor device according to any one of Clauses 1 to 5,
   wherein the extension portion includes a standing portion that stands with respect to the substrate body and a bent portion that is bent from a side part of the standing portion toward the substrate body side, and
   wherein the temperature sensor is mounted on the bent portion.
17. The sensor device according to Clause 16,
   wherein the bent portion has an inner surface facing toward the substrate body side, and
   wherein the temperature sensor is mounted on the inner surface.
18 The sensor device according to any one of Clauses 1 to 17, comprising:
   a cover that covers the substrate and the temperature sensor,
   wherein an opening is formed in a side wall of the cover in a vicinity of the temperature sensor.

The entire contents of the disclosure in Japanese Patent Application No. 2018-183805 are incorporated herein by reference.

All the documents, patent applications, and technical standards mentioned in the present specification are incorporated herein by reference to the same extent as in a case where each of the documents, patent applications, and technical standards is specifically and individually indicated to be incorporated herein by reference.

## Claims

1. A sensor device to be installed on an installation surface, comprising:
a substrate including a substrate body that is disposed along the installation surface and an extension portion that extends from the substrate body in a direction away from the installation surface; and
a temperature sensor that is mounted on the extension portion and that detects an ambient temperature around the sensor device;
wherein the extension portion is or includes a standing portion that stands with respect to the substrate body.

2. The sensor device according to Claim 1,
wherein the standing portion has an inner surface facing toward the substrate body side, and
wherein the temperature sensor is mounted on the inner surface.

3. The sensor device according to Claim 1 or 2,
wherein the extension portion includes a standing portion that stands with respect to the substrate body and a bent portion that is bent from a side part of the standing portion toward the substrate body side, and
wherein the temperature sensor is mounted on the bent portion.

4. The sensor device according to Claim 3,
wherein the bent portion has an inner surface facing toward the substrate body side, and
wherein the temperature sensor is mounted on the inner surface.

5. The sensor device according to any one of Claims 1 to 4,
wherein the substrate body has an affixing surface that is affixed to the installation surface.

6. The sensor device according to any one of Claims 1 to 5,
wherein the substrate is a flexible substrate.

7. The sensor device according to any one of Claims 1 to 6,
wherein the temperature sensor is not in direct contact with any members other than the extension portion.

8. The sensor device according to any one of Claims 1 to 7,
wherein a heat generating module is mounted on the substrate body, and
wherein the temperature sensor is disposed at a position deviated from the heat generating module in plan view of the substrate.

9. The sensor device according to any one of Claims 1 to 8,
wherein the extension portion extends from a part of a peripheral portion of the substrate body.

10. The sensor device according to any one of Claims 1 to 9, comprising:
a cover that covers the substrate and the temperature sensor,
wherein an opening is formed in a side wall of the cover in a vicinity of the temperature sensor.
